# FASCICULE DE BREVET EUROPEEN

(11) **EP 2 300 690 B1**
(45) Date de publication et mention de la délivrance du brevet: **20.11.2013**
(21) Numéro de dépôt: 09784194.4
(22) Date de dépôt: 14.05.2009
(51) Int. Cl.: F01D 25/24, F01D 9/04

(54) **CARTER STRUCTURAL POUR TURBOMACHINE**
GEHÄUSE FÜR EINE STRÖMUNGSMASCHINE
HOUSING FOR A TURBOMACHINE

(30) Priorité: 25.06.2008 FR 0803547
(43) Date de publication de la demande: 30.03.2011
(73) Titulaire: Snecma, 75015 Paris (FR)
(72) Inventeur: DUCHATELLE, Thierry, François, Maurice, FR-94000 Creteil (FR); PAPIN, Thierry, Georges, Paul, FR-91480 Varennes-jarcy (FR); RAULIN, Dominique, FR-77310 Saint Fargeau Ponthierry (FR); SANCHEZ, Arnaud, FR-91480 Quincy sous Sénart (FR)
(74) Mandataire: Ramey, Daniel
(86) Numéro de dépôt international: PCT/FR2009/000564
(87) Numéro de publication internationale: WO 2010/007220

(56) Documents cités:
- EP-A1- 1 548 233
- EP-A2- 1 199 440
- WO-A1-92/19854
- WO-A1-2008/121047

## Description

L'invention se rapporte à un carter structural de turbomachine tel notamment qu'un carter de soufflante, un carter intermédiaire ou un carter d'échappement, ainsi qu'à une turbomachine comprenant ce type de carter.

Dans une turbomachine, telle qu'un turboréacteur d'avion, des carters structuraux sont agencés le long de l'axe moteur afin de rigidifier la turbomachine, éviter les distorsions de la turbomachine et ainsi transmettre au mieux les efforts de poussée à l'avion auquel la turbomachine est fixée. De tels carters structuraux sont par exemple le carter intermédiaire et le carter d'échappement. Le carter intermédiaire est situé entre des compresseurs basse et haute pression et le carter d'échappement est monté en aval d'une section de turbine agencée en sortie d'une chambre de combustion.

Ce type de carter est généralement formé d'au moins deux viroles coaxiales interne et externe, la virole interne délimitant intérieurement une veine d'écoulement d'un flux d'air primaire circulant à l'intérieur du turboréacteur et la paroi externe délimitant extérieurement une veine d'écoulement d'un flux d'air secondaire contournant le turboréacteur. Les viroles interne et externe sont reliées par des bras s'étendant radialement dans les flux d'air primaire et secondaire. Une virole intermédiaire est intercalée entre les viroles interne et externe et traversée par les bras et délimite extérieurement la veine du flux primaire.

Ces carters sont en général réalisés en une seule pièce de fonderie. Il est également connu de réaliser en une seule pièce la virole interne, la virole intermédiaire et les bras radiaux puis de souder la virole externe monobloc sur les bras radiaux.

Cependant, la réalisation de ce type de carter structural est d'autant plus compliquée et coûteuse que le diamètre du carter est important. De plus, en sortie de fonderie, des opérations d'usinages longues et complexes doivent être réalisées sur la virole externe au niveau de ses jonctions avec les bras pour y former des bossages tubulaires de passage de servitudes dans les bras radiaux. Enfin, le carter obtenu forme une pièce monobloc non démontable, ce qui complique les opérations de maintenance de la turbomachine.

Le document EP1548233A1 décrit un dispositif de fixation d'une aube dans un ajour d'une virole externe monobloc. Des pièces intercalaires sont posées sur la face externe de la virole externe 2 et comprennent à leurs extrémités circonférentielles des pattes radiales de fixation par boulonnage sur les extrémités radialement externe des aubes.

Le document WO92/19854 décrit un carter intermédiaire de turbomachine comprenant une virole interne et une virole externe reliées par des bras radiaux comportant chacun une partie interne et une partie externe. L'extrémité radialement interne de la partie externe de chaque bras comprend une embase boulonnée sur une embase correspondante de l'extrémité externe de la partie interne.

L'invention a notamment pour but d'éviter ces inconvénients de façon simple, efficace et économique.

Elle propose à cet effet, un carter structural pour turbomachine, tel qu'un carter intermédiaire ou un carter d'échappement, formé d'éléments comprenant au moins deux viroles coaxiales interne et externe et des bras radiaux reliant les viroles, caractérisé en ce qu'au moins l'une des viroles est formée de plusieurs portions de cylindre dont les extrémités circonférentielles comportent des brides radiales fixées par boulonnage sur des brides radiales correspondantes des bras radiaux.

Selon l'invention, au moins l'une des viroles du carter structural est réalisée en plusieurs parties, ce qui permet de diminuer la dimension des pièces, facilite leur réalisation en fonderie et garantit une meilleure qualité métallurgique des pièces obtenues. Le carter structural est démontable du fait de l'assemblage par boulonnage, ce qui simplifie les opérations de maintenance et diminue les coûts en permettant de ne remplacer que la partie endommagée.

Selon une autre caractéristique de l'invention, le carter structural comprend également une virole intermédiaire agencée entre les viroles interne et externe et traversée par les bras radiaux, la virole intermédiaire pouvant être formée de plusieurs éléments fixés ensemble par boulonnage.

Chaque bras radial peut également être formé d'une partie interne reliant les viroles interne et intermédiaire et d'une partie externe reliant les viroles intermédiaire et externe.

Dans une réalisation de l'invention, les viroles interne et intermédiaire et la partie interne des bras radiaux sont formées d'une seule pièce.

Selon une autre caractéristique de l'invention, l'extrémité radialement interne de la partie externe de chaque bras comprend une embase boulonnée sur une embase correspondante de l'extrémité externe de la partie interne du bras radial.

L'extrémité radialement externe de la partie externe de chaque bras peut comprendre une semelle s'étendant circonférentiellement et comportant un bossage tubulaire de passage de servitudes communiquant avec l'intérieur de la partie externe du bras.

Le bossage externe de passage de servitudes est ainsi intégré au bras, ce qui est plus simple à réaliser qu'un bossage intégré à une virole externe monobloc de la technique antérieure.

Les bords circonférentiels de chaque semelle peuvent comprendre une bride radiale boulonnée sur une bride radiale correspondante d'une portion de cylindre de la virole externe.

Les viroles interne et externe et les bras radiaux peuvent être réalisés dans des matériaux différents, ce qui n'était pas possible dans des carters structuraux monobloc obtenus de fonderie. L'utilisation de différents matériaux permet de compenser l'alourdissement dû aux boulons ainsi qu'aux embases des parties interne et externe des bras radiaux.

Les viroles interne et externe et les bras radiaux peuvent également être réalisés par des techniques différentes telles que la fonderie, le forgeage et la métallurgie des poudres. En variante, ces éléments peuvent être réalisés en matériau composite.

Ce type de carter structural en plusieurs parties est particulièrement adapté à des carters dont le diamètre est supérieur à 110 centimètres.

L'invention concerne également une turbomachine, telle qu'un turboréacteur ou un turbopropulseur, caractérisée en ce qu'elle comprend un carter tel que décrit ci-dessus.

L'invention concerne encore des éléments de carter structural pour turbomachine, comprenant des viroles coaxiales et des bras radiaux reliant ces viroles, caractérisés en ce qu'ils comprennent des parties destinées à être fixées ensemble par boulonnage.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est vue schématique en coupe axiale d'une turbomachine à double flux ;
- la figure 2 est une vue schématique en perspective depuis l'amont d'un carter intermédiaire structural selon l'invention ;
- la figure 3 est une schématique en perspective et à plus grande échelle de la zone III délimitée sur la figure 2 ;
- la figure 4 est une vue schématique en coupe transversale d'un carter d'échappement structural selon l'invention ;
- la figure 5 est une vue schématique partielle en coupe transversale d'une variante de réalisation d'un carter d'échappement structural.

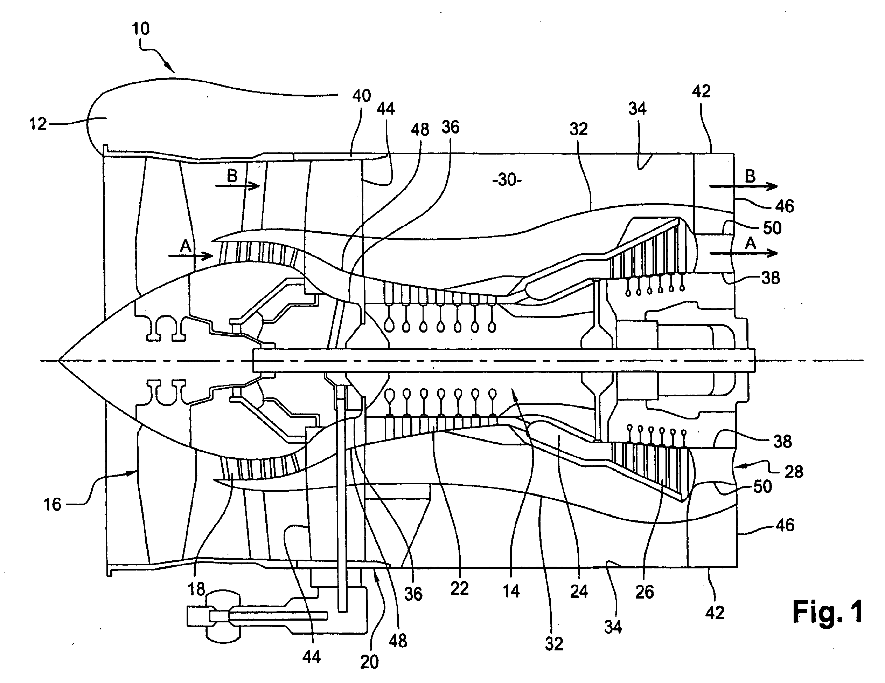

La figure 1 représente une turbomachine 10 à double flux comportant une nacelle 12 de forme cylindrique qui entoure un turboréacteur 14 et une roue de soufflante 16 montée en amont du turboréacteur 14 qui comprend essentiellement, d'amont en aval un compresseur basse pression 18, un carter intermédiaire 20, un compresseur haute pression 22, une chambre de combustion 24, une turbine 26 et un carter d'échappement 28.

En fonctionnement, la roue de soufflante 16 entraînée par la turbine 26 aspire un flux d'air qui se divise en un flux d'air primaire (flèches A) qui traverse le turboréacteur 14 et en un flux d'air secondaire (flèches B) qui s'écoule dans une conduite de soufflante 30 à l'intérieur de la nacelle 12 vers l'arrière autour du turboréacteur 14.

La conduite de soufflante 30 est formée de deux parois coaxiales sensiblement cylindriques, respectivement interne 32 et externe 34.

Le carter intermédiaire 20 et le carter d'échappement 28 sont des carters structuraux et permettent de rigidifier la turbomachine pour limiter ses distorsions en fonctionnement. Les carters intermédiaire 20 et d'échappement 28 comprennent chacun deux viroles coaxiales interne 36, 38 et externe 40, 42 disposées l'une à l'intérieur de l'autre et reliées par des bras radiaux 44, 46. L'extrémité aval de la virole externe 40 du carter intermédiaire 20 est reliée à la paroi externe 34 de la conduite de soufflante 30, elle-même reliée à l'extrémité amont de la virole externe 42 du carter d'échappement 28.

Les carters intermédiaire 20 et d'échappement 28 comprennent chacun une virole intermédiaire 48, 50 agencée entre les viroles interne 36, 38 et externe 40, 42 et traversée par les bras radiaux 44, 46. Les parties internes des bras radiaux des carters intermédiaire 20 et d'échappement 28 sont situées dans le flux d'air primaire (flèches A) tandis que les parties externes sont situées dans le flux d'air secondaire (flèches B).

Les viroles internes 36, 38 et les viroles intermédiaires 48, 50 des carters intermédiaire 20 et d'échappement 28 délimitent intérieurement et extérieurement, respectivement, la veine d'écoulement du flux d'air primaire (flèches A). Les viroles externes 40, 42 de ces carters structuraux 20, 28 délimitent extérieurement la veine d'écoulement du flux d'air secondaire (flèches B).

Dans la technique connue, un carter structural est habituellement réalisé en une seule pièce de fonderie, ce qui s'avère d'autant plus compliqué et coûteux que son diamètre est important.

L'invention permet de remédier à cet inconvénient ainsi qu'à ceux mentionnés précédemment, grâce au fait qu'au moins l'un des éléments constitutifs du carter structural, c'est-à-dire l'une des viroles interne 36, 38, intermédiaire 48, 50 et externe 40, 42 et les bras radiaux 44, 46, est formé de plusieurs parties fixées ensemble par boulonnage.

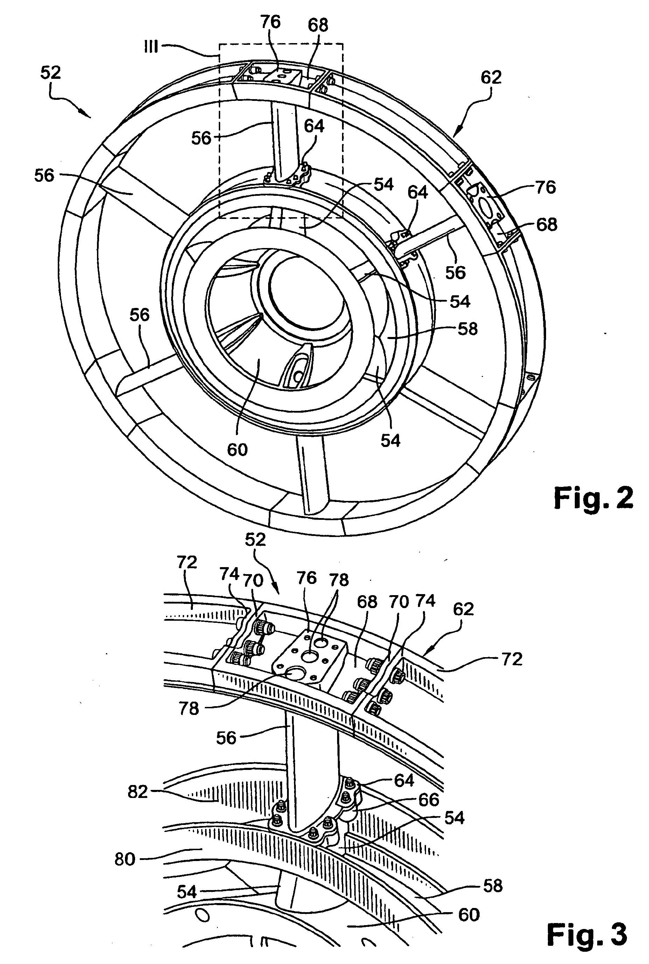

Les figures 2 et 3 représentent un carter intermédiaire structural 52 en plusieurs parties. Les bras radiaux sont formées en deux parties et comprennent une partie interne 54 dont l'extrémité externe traverse la virole intermédiaire 58 et est raccordée à une partie externe 56. La partie interne 54 de chaque bras relie la virole interne 60 et la virole intermédiaire 58 tandis que sa partie externe 56 relie la virole intermédiaire 58 et la virole externe 62.

La partie externe 56 de chaque bras radial comprend à son extrémité interne une embase circonférentielle 64 boulonnée radialement sur une embase circonférentielle 66 de l'extrémité externe de la partie interne 54 du bras. Chaque partie externe 56 comprend à son extrémité externe une semelle 68 dont les extrémités circonférentielles comportent des brides radiales 70.

La virole externe 62 est formée de plusieurs portions de cylindre 72 à section en U tournée vers l'extérieur de la turbomachine. Ces portions de cylindre 72 comportent des brides radiales 74 à leurs extrémités circonférentielles (figure 3).

La bride radiale 74 d'une extrémité circonférentielle d'une portion de cylindre 72 est fixée par boulonnage sur une bride radiale 70 de la semelle 68 d'une partie externe 56 d'un bras radial, l'autre extrémité circonférentielle de la portion de cylindre 72 étant fixée par boulonnage sur une extrémité circonférentielle de la semelle 68 de la partie externe 56 d'un bras adjacent. L'ensemble formé par les portions de cylindre 72 fixées aux semelles 68 constitue la virole externe 62.

Chaque semelle 68 comprend un bossage tubulaire 76 comportant des orifices 78 communiquant avec l'intérieur de la partie externe 56 d'un bras radial et permettant le passage de conduits d'huile ou de câbles électriques.

La virole intermédiaire 58 comprend à ses extrémités amont et aval des parois 80, 82 s'étendant radialement vers l'extérieur. Des panneaux de carénage cylindriques (non représentés) sont montées sur ces parois radiales 80, 82, entre les extrémités externes des parties internes 54 de deux bras radiaux consécutifs afin de former intérieurement la paroi interne de la conduite de soufflante 30.

La virole interne 60, les parties internes 54 des bras radiaux ainsi que la virole intermédiaire 58 et les parois radiales 80, 82 sont formées d'une seule pièce.

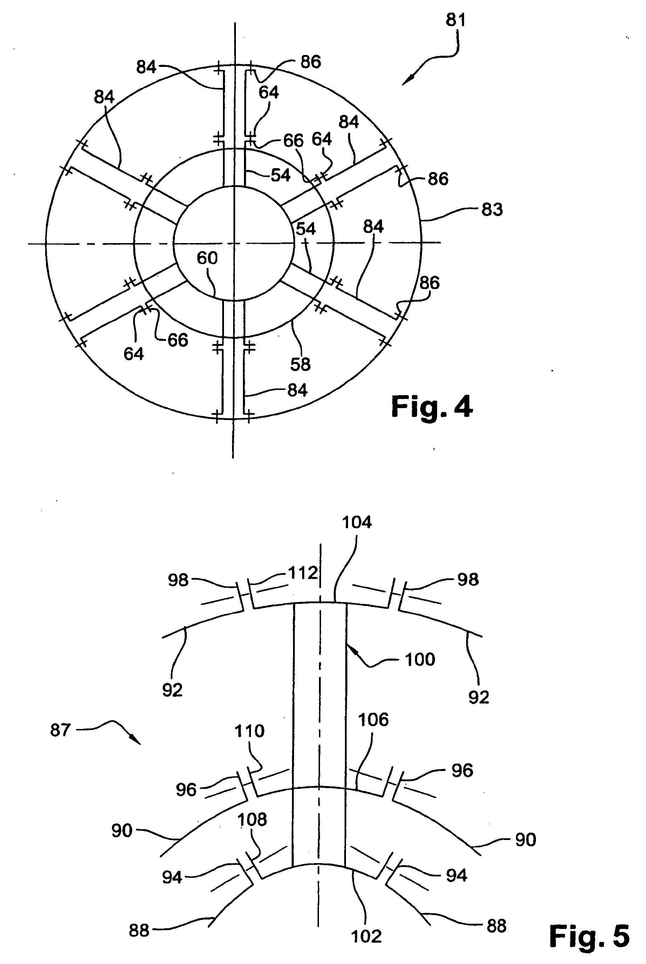

La figure 4 représente schématiquement un carter d'échappement structural 81 dont la virole interne 60, la virole intermédiaire 58 ainsi que les parties internes 54 des bras radiaux sont formées d'une seule pièce. La virole externe 83 est également formée d'une seule pièce. De manière similaire au carter intermédiaire structural 52 représenté aux figures 2 et 3, l'extrémité interne de la partie externe 84 de chaque bras radial comprend une embase 64 boulonnée sur une embase 66 de l'extrémité externe de la partie interne 54 du bras. L'extrémité externe de la partie externe 84 de chaque bras comprend également une semelle 86 boulonnée radialement sur la virole externe 83. Comme dans les figures 2 et 3, les bossages de passage de servitudes sont formés sur la semelle 86 et traversent la virole externe 83, ce qui est simple à réaliser et permet de garantir une étanchéité parfaite à l'huile circulant dans les orifices des bossages.

Une autre variante de réalisation d'un carter d'échappement structural 87 est représentée en figure 5. Sur cette figure, les viroles interne, intermédiaire et externe sont formées de plusieurs portions de cylindre 88, 90, 92 dont les extrémités circonférentielles comprennent des brides radiales 94, 96, 98. Chaque bras radial 100 est réalisé en une seule pièce et comporte une semelle interne 102 et externe 104 à ses extrémités interne et externe, respectivement, ainsi qu'une semelle intermédiaire 106 positionnée à environ un tiers de la longueur du bras 100 depuis l'extrémité interne du bras 100. Les semelles interne 102, intermédiaire 106 et externe 104 comportent à leurs extrémités circonférentielles des brides radiales 108, 110, 112 de fixation sur les brides radiales 94, 96, 98 des portions de cylindre 88, 90, 92 des viroles interne, intermédiaire et externe.

Les carters structuraux représentés aux dessins peuvent avoir des viroles interne, intermédiaire et externe ainsi que des bras radiaux réalisés dans des matériaux différents, ce qui permet de compenser l'augmentation de masse due à l'ajout de fixations par boulonnage. Les différentes parties des viroles interne, intermédiaire, externe et des bras radiaux peuvent également être réalisées dans des matériaux différents.

Les éléments constitutifs d'un carter structural ainsi que les différentes parties de ces éléments constitutifs peuvent être réalisés par des techniques différentes telles que la fonderie, le forgeage et la métallurgie des poudres ou peuvent être en matériau composite.

L'invention est particulièrement intéressante pour les turbomachines dont les carters structuraux ont un diamètre supérieur à 110 centimètres environ.

L'invention permet ainsi de n'avoir à réaliser de fonderie que des pièces de petites dimensions telles que les portions de cylindre ou bien les bras radiaux en une ou deux parties. L'invention permet également un démontage simple du carter structural lors d'une opération de maintenance du fait de l'assemblage des différentes pièces entres elles par boulonnage.

Les bossages 76 de passage de servitudes sont intégrés aux semelles 68, 86 des parties externes 56, 84 des bras radiaux et non plus à la virole externe comme dans la technique antérieure, ce qui simplifie leur réalisation et évite une phase d'usinage longue et compliquée.

D'autres réalisations de carters structuraux peuvent être imaginés sans sortir du cadre de l'invention. En particulier, il est possible de combiner les modes de réalisation des figures 2 et 5 pour réaliser un carter structural comportant des viroles interne, intermédiaire et externe formées de plusieurs portions de cylindre 88, 90, 92, et dont les bras radiaux comprennent deux parties interne 54 et externe 56.

Les viroles interne et intermédiaire et les parties internes des bras radiaux peuvent être formées en une seule pièce fixée sur les parties externes des bras radiaux formées d'une seule pièce avec la virole externe.

Dans une autre variante de l'invention, la virole intermédiaire peut être formée d'une seule pièce avec des bras radiaux monobloc, les viroles interne et externe étant boulonnées sur les extrémités interne et externe des bras radiaux.

Dans encore une autre variante de l'invention, les viroles intermédiaire et externe peuvent être réalisées d'une seule pièce avec les bras radiaux, cet ensemble étant boulonné sur une virole interne monobloc.

L'invention n'est pas limitée aux réalisations comprenant une virole intermédiaire telles que représentées dans les dessins. Le carter structural peut ne comprendre que deux viroles interne et externe reliées par des bras radiaux comme pour certains carters d'échappement. Dans ce cas, la virole externe est directement reliée à un carter de turbine et délimite extérieurement la veine d'écoulement du flux d'air primaire.

## Revendications

1. Carter structural (52) pour turbomachine, tel qu'un carter intermédiaire (52) ou un carter d'échappement (81, 87), formé d'éléments comprenant au moins deux viroles coaxiales interne (60) et externe (62) et des bras radiaux reliant les viroles (60, 62), **caractérisé en ce qu'**au moins l'une des viroles (58, 60, 62) est formée de plusieurs portions de cylindre (72) dont les extrémités circonférentielles comportent des brides radiales (74) fixées par boulonnage sur des brides radiales (70) correspondantes des bras radiaux.

2. Carter selon la revendication 1, **caractérisé en ce qu'**il comprend également une virole intermédiaire (58) agencée entre les viroles interne (60) et externe (62) et traversée par les bras radiaux.

3. Carter selon la revendication 2, **caractérisé en ce que** la virole intermédiaire (58) est formée de plusieurs éléments fixés ensemble par boulonnage.

4. Carter selon la revendication 2 ou 3, **caractérisé en ce que** chaque bras radial est formé d'une partie interne (54) reliant les viroles interne (60) et intermédiaire (58) et d'une partie externe (56) reliant les viroles intermédiaire (58) et externe (62).

5. Carter selon la revendication 4, **caractérisé en ce que** les viroles interne (60) et intermédiaire (58) et la partie interne (54) des bras radiaux sont d'une seule pièce.

6. Carter selon la revendication 4 ou 5, **caractérisé en ce que** l'extrémité radialement interne de la partie externe (56) de chaque bras comprend une embase (64) boulonnée sur une embase (66) correspondante de l'extrémité externe de la partie interne (54) du bras radial.

7. Carter selon l'une des revendications 4 à 6, **caractérisé en ce que** l'extrémité radialement externe de la partie externe (56) de chaque bras comprend une semelle (68) s'étendant circonférentiellement et comportant un bossage tubulaire (76) de passage de servitudes communiquant avec l'intérieur de la partie externe (56) du bras.

8. Carter selon la revendication 7, **caractérisé en ce que** les bords circonférentiels de chaque semelle (68) comprennent une bride radiale (70) boulonnée sur une bride radiale (74) correspondante d'une portion de cylindre (72) de la virole externe (62).

9. Carter selon l'une des revendications précédentes, **caractérisé en ce que** les viroles interne (60) et externe (62) et les bras radiaux sont réalisés dans des matériaux différents.

10. Carter selon l'une des revendications précédentes, **caractérisé en ce que** les viroles interne (60) et externe (62) et les bras radiaux sont réalisés par des techniques différentes telles que la fonderie, le forgeage et la métallurgie des poudres.

11. Carter selon l'une des revendications précédentes, **caractérisé en ce qu'**il a un diamètre supérieur à 110 centimètres.

12. Turbomachine, telle qu'un turboréacteur ou un turbopropulseur, **caractérisée en ce qu'**elle comprend un carter (52, 81) selon l'une des revendications précédentes.

## Patentansprüche

1. Strukturgehäuse (52) für Turbomaschinen bzw. Turbinentriebwerke, wie etwa ein Zwischengehäuse (52) bzw. Austrittsgehäuse (81, 87), das aus Elementen mit zumindest zwei koaxial verlaufenden Ringen, nämlich einem inneren (60) und einem äußeren (62), und mit radial verlaufenden Armen gebildet ist, welche die Ringe (60, 62) verbinden, **dadurch gekennzeichnet, dass** zumindest einer der Ringe (58, 60, 62) aus mehreren Zylinderabschnitten (72) gebildet ist, deren Umfangsenden radial verlaufende Flansche (74) aufweisen, welche an entsprechende radiale Flansche (70) der radial verlaufenden Arme durch Verschrauben befestigt sind.

2. Gehäuse nach Anspruch 1, **dadurch gekennzeichnet, dass** es auch einen Zwischenring (58) aufweist, der zwischen dem inneren (60) und dem äußeren Ring (62) angeordnet ist und von den radial verlaufenden Armen durchsetzt wird.

3. Gehäuse nach Anspruch 2, **dadurch gekennzeichnet, dass** der Zwischenring (58) aus mehreren Elementen gebildet ist, die durch Verschrauben aneinander befestigt sind.

4. Gehäuse nach Anspruch 2 oder 3, **dadurch gekennzeichnet, dass** jeder radial verlaufende Arm aus einem inneren Abschnitt (54) gebildet ist, welcher den inneren Ring (50) und den Zwischenring (58) verbindet, sowie aus einem äußeren Abschnitt (56), welcher den Zwischenring (58) und den äußeren Ring (62) verbindet.

5. Gehäuse nach Anspruch 4, **dadurch gekennzeichnet, dass** der innere Ring (60) und der Zwischenring (58) und der innere Abschnitt (54) der radial verlaufenden Arme aus einem Stück bestehen.

6. Gehäuse nach Anspruch 4 oder 5, **dadurch gekennzeichnet, dass** das radial innere Ende des äußeren Abschnitts (56) eines jeden Arms ein Basisteil (64) aufweist, das mit einem entsprechenden Basisteil (66) des äußeren Endes von dem inneren Abschnitt (54) des radial verlaufenden Arms verschraubt ist.

7. Gehäuse nach einem der Ansprüche 4 bis 6, **dadurch gekennzeichnet, dass** das radial äußere Ende des äußeren Abschnitts (56) eines jeden Arms ein Sockelteil (68) aufweist, das umfänglich verläuft und eine rohrförmige Erhebung (76) für den Hilfsdurchgang enthält, die mit dem Innenraum des äußeren Abschnitts (56) des Arms kommuniziert.

8. Gehäuse nach Anspruch 7, **dadurch gekennzeichnet, dass** die Umfangsränder eines jeden Sockelteils (68) einen radial verlaufenden Flansch (70) aufweisen, der mit einem entsprechenden radial verlaufenden Flansch (74) eines Zylinderabschnitts (72) des äußeren Rings (62) verschraubt ist.

9. Gehäuse nach einem der vorangehenden Ansprüche, **dadurch gekennzeichnet, dass** der innere Ring (60) und der äußere Ring (62) und die radial verlaufenden Arme aus unterschiedlichen Materialien hergestellt sind.

10. Gehäuse nach einem der vorangehenden Ansprüche, **dadurch gekennzeichnet, dass** der innere Ring (60) und der äußerere Ring (62) und die radial verlaufenden Arme mit unterschiedlichen Techniken hergestellt sind, wie etwa Gießtechnik, Schmieden und Pulvermetallurgie.

11. Gehäuse nach einem der vorangehenden Ansprüche, **dadurch gekennzeichnet, dass** es einen Durchmesser von über 110 Zentimetern hat.

12. Turbomaschine bzw. Turbinentriebwerk, wie etwa Turbostrahltriebwerk oder Turbopropellertriebwerk, **dadurch gekennzeichnet, dass** sie bzw. es ein Gehäuse (52, 8 1) nach einem der vorangehenden Ansprüche aufweist.

## Claims

1. A structural frame (52) for a turbomachine, such as an intermediate frame (52) or an exhaust frame (81, 87), made up of elements comprising at least two inner (60) and outer (62)coaxial rings, and radial arms interconnecting the rings (60, 62), the frame being **characterized in that** at least one of the rings (58, 60, 62) is made up of a plurality of cylinder portions (72) having circumferential ends that include radial flanges (74) that are fastened by bolting to corresponding radial flanges (70) of the radial arms.

2. A frame according to claim 1, **characterized in that** it also includes an intermediate ring (58) arranged between the inner and outer rings (60, 62) and having the radial arms passing therethrough.

3. A frame according to claim 2, **characterized in that** the intermediate ring (58) is made up of a plurality of elements that are fastened together by bolting.

4. A frame according to claim 2 or claim 3, **characterized in that** each radial arm is made up of an inner part (54) connecting together the inner and intermediate rings (60, 58), and an outer part (56) connecting together the intermediate and outer rings (58, 62).

5. A frame according to claim 4, **characterized in that** the inner and intermediate rings (60, 58) and the inner parts (54) of the radial arms are made as a single piece.

6. A frame according to claim 4 or claim 5, **characterized in that** the radially inner end of the outer part (56) of each arm includes a base (64) bolted to a corresponding base (66) at the outer end of the inner part (54) of the radial arm.

7. A frame according to any one of claims 4 to 6, **characterized in that** the radially-outer end of the outer part (56) of each arm includes a soleplate (68) extending circumferentially and including a tubular projection (76) for passing services that communicates with the inside of the outer part (56) of the arm.

8. A frame according to claim 7, **characterized in that** the circumferential edges of each soleplate (68) include respective radial flanges (70) bolted to corresponding radial flanges (74) of cylinder portions (72) of the outer ring (62).

9. A frame according to any preceding claim, **characterized in that** the inner and outer rings (60, 62) and the radial arms are made out of different materials.

10. A frame according to any preceding claim, **characterized in that** the inner and outer rings (60, 62) and the radial arms are made using different techniques such as casting, forging, and powder metallurgy.

11. A frame according to any preceding claim, **characterized in that** it has a diameter greater than 110 cm.

12. A turbomachine such as a turbojet or a turboprop, **characterized in that** it includes a frame (52, 81) according to any preceding claim.
